# EUROPEAN PATENT SPECIFICATION

(11) **EP 4 329 030 B1**
(45) Date of publication and mention of the grant of the patent: **07.05.2025**
(21) Application number: 23178586.6
(22) Date of filing: 12.06.2023
(51) Int. Cl.: H01M 10/0525, H01M 10/0567

(54) **ELECTROLYTE FOR RECHARGEABLE LITHIUM BATTERY AND RECHARGEABLE LITHIUM BATTERY INCLUDING THE SAME**
ELEKTROLYT FÜR EINE WIEDERAUFLADBARE LITHIUMBATTERIE UND WIEDERAUFLADBARE LITHIUMBATTERIE DAMIT
ÉLECTROLYTE POUR BATTERIE AU LITHIUM RECHARGEABLE ET BATTERIE AU LITHIUM RECHARGEABLE LE COMPRENANT

(30) Priority: 25.08.2022 KR 20220107153
(43) Date of publication of application: 28.02.2024
(73) Proprietor: Samsung SDI Co., Ltd., Yongin-si, Gyeonggi-do 17084 (KR); Ulsan National Institute of Science and Technology (UNIST), Eonyang-eup Ulju-gun Ulsan 44919 (KR)
(72) Inventor: Bae, Tae Hyon, 17084 Yongin-si, Gyeonggi-do (KR); Kim, Yunhee, 17084 Yongin-si, Gyeonggi-do (KR); Kim, Sanghyung, 17084 Yongin-si, Gyeonggi-do (KR); Son, Seunghyeon, 17084 Yongin-si, Gyeonggi-do (KR); Lee, Harim, 17084 Yongin-si, Gyeonggi-do (KR); Yu, Arum, 17084 Yongin-si, Gyeonggi-do (KR); Lee, Jeong-A, 44919 Ulju-gun, Ulsan (KR); Kim, Saehun, 44919 Ulju-gun, Ulsan (KR); Choi, Nam-Soon, 44919 Ulju-gun, Ulsan (KR)
(74) Representative: Gulde & Partner

(56) References cited:
- US-A1- 2020 388 876
- US-A1- 2022 158 224

## Description

### BACKGROUND

### 1. Field

Embodiments of this disclosure relate to an electrolyte for a rechargeable lithium battery and a rechargeable lithium battery including the same.

### 2. Description of the Related Art

A rechargeable lithium battery may be recharged and has three or more times as high energy density per unit weight as an existing lead storage battery, nickelcadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

For example, as information technology (IT) devices become increasingly high-performance, high-capacity batteries are required, wherein the high capacity may be realized by expanding a voltage region to increase energy density, but there is a problem of oxidizing an electrolyte in the high voltage region, thereby deteriorating performance of a positive electrode.

For example, LiPF₆, which is most commonly used as a lithium salt of an electrolyte, has a problem of reacting with an electrolytic solvent to promote depletion of a solvent and generate a large amount of gas. As LiPF₆ decomposes, decomposition products such as HF and PF₅ are generated, which causes electrolyte depletion in the battery and leads to deterioration of high-temperature performance and poor safety.

The decomposition products of the electrolyte are deposited in the form of a film on the surface of the electrodes and thereby, increase internal resistance (e.g., internal electrical resistance) of the battery and eventually, deteriorate battery performance and shorten a cycle-life. For example, at a high temperature where the side reaction is accelerated, gas components generated by the side reaction may rapidly increase the battery internal pressure and have a fatal adverse effect on stability of the battery.

In the high voltage region, the electrolyte oxidation is very accelerated, and thus, greatly increases resistance (e.g., electrical resistance) of the electrodes during the long-term charging and discharging process.

Accordingly, an electrolyte applicable under high voltage and high temperature conditions is required or desired.

WO 2020/197093 A1 describes an electrolyte for a rechargeable lithium battery comprising: a fluoroethylene carbonate as organic solvent, a lithium salt, and additives, such as hexane tricarbonitrile.

### SUMMARY

One or more embodiments of the present disclosure provide an electrolyte for a rechargeable lithium battery including an additive having a functional group capable of removing (e.g., by way of a reaction with) a decomposition product in the electrolyte.

One or more embodiments provide a rechargeable lithium battery having improved high-temperature storage characteristics, cycle-life characteristics, and safety under a high voltage condition by applying the electrolyte.

The present invention provides an electrolyte for a rechargeable lithium battery as defined in claim 1. The rechargeable lithium battery includes a non-aqueous organic solvent, a lithium salt, and an additive, wherein the additive is a composition including a first compound, a second compound, and a third compound, the first compound is represented by Chemical Formula 1, the second compound is represented by Chemical Formula 2, and the third compound is a cyclic carbonate compound.

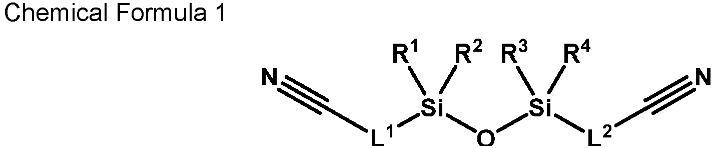

In Chemical Formula 1,
L¹ and L² are each independently a substituted or unsubstituted C1 to C10 alkylene group, and
R¹ to R⁴ are each independently a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group; 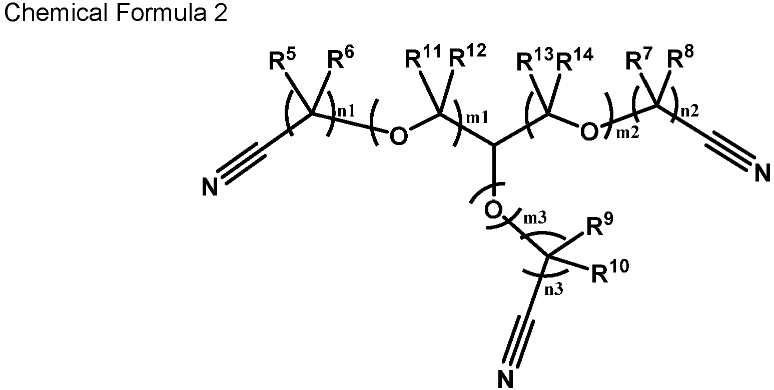 wherein, in Chemical Formula 2,
   R⁵ to R¹⁴ are each independently hydrogen, a halogen, a cyano group, a substituted or unsubstituted C1 to C5 alkyl group, a substituted or unsubstituted C1 to C5 alkoxy group, or a substituted or unsubstituted C6 to C12 aryl group,
   n1 to n3 are each independently one selected from integers of 0 to 20,
   n1+n2+n3 ≥ 1, and
   m1 to m3 are each independently one selected from integers of 0 or 1.

L¹ and L² of Chemical Formula 1 may each independently be a substituted or unsubstituted C3 to C10 alkylene group.

R¹ to R⁴ of Chemical Formula 1 may each independently be a substituted or unsubstituted C1 to C10 alkyl group.

The first compound may be 1,3-bis(3-cyanopropyl)tetramethyl disiloxane.

In Chemical Formula 2, n1 to n3 may be different integers.

The second compound may be selected from 1,3,5-hexanetricarbonitrile, 1,3,6-hexanetricarbonitrile, and 1,2,3-tris(2-cyanoethoxy)propane.

The third compound may be represented by Chemical Formula 3.

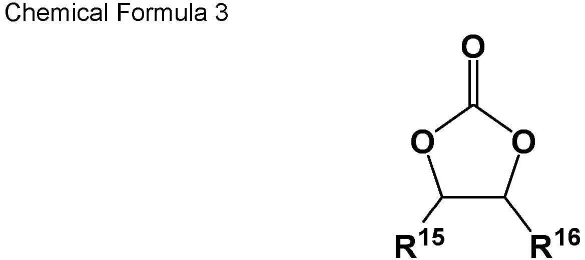

In Chemical Formula 3,
R¹⁵ and R¹⁶ are each independently hydrogen, a halogen, a cyano group (CN), a nitro group (NO₂), or a fluorine-substituted C1 to C5 alkyl group, and
at least one selected from R¹⁵ and R¹⁶ is a halogen, a cyano group (CN), a nitro group (NO₂), or a fluorine-substituted C1 to C5 alkyl group.

The third compound may be fluoroethylene carbonate, difluoroethylene carbonate, chloroethylene carbonate, dichloroethylene carbonate, bromoethylene carbonate, dibromoethylene carbonate, nitroethylene carbonate, or cyanoethylene carbonate.

The first compound may be included in an amount of about 0.5 parts by weight to about 3.0 parts by weight based on 100 parts by weight of the electrolyte for a rechargeable lithium battery.

The second compound may be included in an amount of about 1.0 part by weight to about 5.0 parts by weight based on 100 parts by weight of the electrolyte for a rechargeable lithium battery.

The third compound may be included in an amount of about 3.0 parts by weight to about 10 parts by weight based on 100 parts by weight of the electrolyte for a rechargeable lithium battery.

A total weight of the first compound and the second compound may be included in an amount of about 2.0 parts by weight to about 6.0 parts by weight based on 100 parts by weight of the electrolyte for a rechargeable lithium battery.

The first compound and the second compound may be mixed together in a weight ratio of about 1:0.5 to about 1:5.

The composition (e.g., the composition including the first compound, the second compound, and the third compound) may be included in an amount of about 5.0 parts by weight to about 15 parts by weight based on 100 parts by weight of the electrolyte for a rechargeable lithium battery.

According to another aspect of the present invention there is provided a rechargeable lithium battery including a positive electrode including a positive electrode active material, a negative electrode including a negative electrode active material, and the aforementioned electrolyte for a rechargeable lithium battery.

The negative electrode active material may be a carbon-based negative electrode active material.

The rechargeable lithium battery may operate at a high voltage of greater than or equal to about 4.5 V.

It is possible to realize a rechargeable lithium battery having improved cycle-life characteristics and safety while suppressing or reducing an increase in the resistance (e.g., electrical resistance) of the battery when stored at a high temperature under a high voltage.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a schematic perspective view illustrating a rechargeable lithium battery according to one or more embodiments of the present disclosure.
FIGS. 2A-2D are energy dispersive spectrometry (EDS) mapping images of surfaces of negative electrodes after charging and discharging of the full-cell.
FIGS. 3A-3B are charts showing the contents of PO₂F₂⁻ and HF after high-temperature storage of the full-cell.
FIG. 4 is a graph showing the discharge capacity according to the cycle progress during high-temperature charging and discharging of the rechargeable lithium battery cells.
FIG. 5 is a graph showing the measurement results of the coulombic efficiency according to the high-temperature charge/discharge cycle for the rechargeable lithium battery cells.

### DETAILED DESCRIPTION

Hereinafter, a rechargeable lithium battery according to one or more embodiments of the present disclosure will be described in more detail with reference to the accompanying drawings. However, these embodiments are examples, the present disclosure is not limited thereto.

As used herein, when a definition is not otherwise provided, "substituted" refers to replacement of at least one hydrogen of a substituent by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group.

In one example of the present disclosure, "substituted" refers to replacement of at least one hydrogen of a substituent by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in examples of the present disclosure, "substituted" refers to replacement of at least one hydrogen of a substituent by deuterium, a halogen, a C1 to C20 alkyl group, a C6 to C30 aryl group, a C1 to C10 fluoroalkyl group, or a cyano group. In addition, in examples of the present disclosure, "substituted" refers to replacement of at least one hydrogen of a substituent by deuterium, a halogen, a C1 to C5 alkyl group, a C6 to C18 aryl group, a C1 to C5 fluoroalkyl group, or a cyano group. In addition, in examples of the present disclosure, "substituted" refers to replacement of at least one hydrogen of a substituent by deuterium, a cyano group, a halogen, a methyl group, an ethyl group, a propyl group, a butyl group, a phenyl group, a biphenyl group, a terphenyl group, a trifluoromethyl group, or a naphthyl group.

As used herein, "an aryl group" refers to a group including at least one hydrocarbon aromatic moiety, and may include a group in which all elements of the hydrocarbon aromatic moiety have p-orbitals which form conjugation, for example, a phenyl group, a naphthyl group, and the like, a group in which two or more hydrocarbon aromatic moieties may be linked by a sigma bond, for example a biphenyl group, a terphenyl group, a quaterphenyl group, and the like, and a group in which two or more hydrocarbon aromatic moieties are fused directly or indirectly to provide a nonaromatic fused ring, for example a fluorenyl group.

The aryl group may include a monocyclic, polycyclic or fused ring polycyclic (e.g., rings sharing adjacent pairs of carbon atoms) functional group.

In one or more embodiments, the substituted or unsubstituted C6 to C30 aryl group may be a substituted or unsubstituted phenyl group, a substituted or unsubstituted naphthyl group, a substituted or unsubstituted anthracenyl group, a substituted or unsubstituted phenanthrenyl group, a substituted or unsubstituted naphthacenyl group, a substituted or unsubstituted pyrenyl group, a substituted or unsubstituted biphenyl group, a substituted or unsubstituted p-terphenyl group, a substituted or unsubstituted m-terphenyl group, a substituted or unsubstituted o-terphenyl group, a substituted or unsubstituted chrysenyl group, a substituted or unsubstituted triphenylene group, a substituted or unsubstituted perylenyl group, or a substituted or unsubstituted fluorenyl group.

A rechargeable lithium battery may be classified into a lithium ion battery, a lithium ion polymer battery, or a lithium polymer battery depending on kinds of a separator and an electrolyte. It also may be classified to be cylindrical, prismatic, coin-type, pouch-type, or the like depending on a shape of the rechargeable lithium battery. In addition, it may be a bulk type (or kind) or a thin film type (kind) depending on a size of the rechargeable lithium battery. Structures and manufacturing methods for lithium ion batteries pertaining to this disclosure may be any suitable ones generally used in the art.

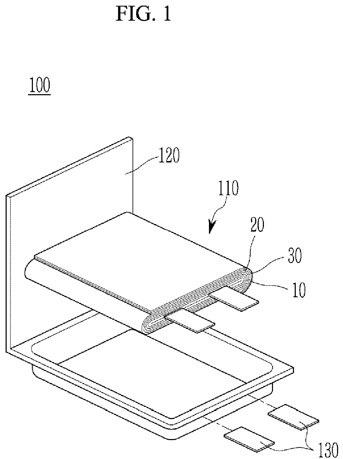

FIG. 1 is an exploded perspective view of a rechargeable lithium battery according to one or more embodiments of the present disclosure. The rechargeable lithium battery according to one or more embodiments is for example described as a pouch-type battery, but the present disclosure is not limited thereto, and may be applied to various suitable types (or kinds) of batteries, such as cylindrical and prismatic batteries.

Referring to FIG. 1, a rechargeable lithium pouch battery 100 according to one or more embodiments includes an electrode assembly 110 manufactured by winding a separator 30 between a positive electrode 10 and a negative electrode 20, a case 120 including the electrode assembly 110, and an electrode tab 130 that provides an electrical path to externally draw currents generated in the electrode assembly 110. The case 120 is sealed by overlapping the two sides facing each other. In addition, an electrolyte is injected into the case 120 including the electrode assembly 110 and the positive electrode 10, the negative electrode 20, and the separator 30 are impregnated with the electrolyte.

Hereinafter, a more detailed configuration of the rechargeable lithium battery 100 according to one or more embodiments of the present disclosure will be described.

A rechargeable lithium battery according to one or more embodiments of the present disclosure includes an electrolyte, a positive electrode, and a negative electrode.

The electrolyte includes a non-aqueous organic solvent, a lithium salt and an additive, wherein the additive is a composition including a first compound, a second compound, and a third compound, the first compound is represented by Chemical Formula 1, the second compound is represented by Chemical Formula 2, and the third compound is a cyclic carbonate compound.

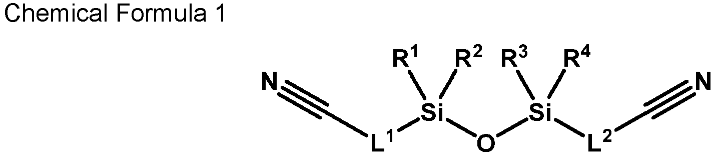

In Chemical Formula 1,
L¹ and L² are each independently a substituted or unsubstituted C1 to C10 alkylene group, and
R¹ to R⁴ are each independently a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group; 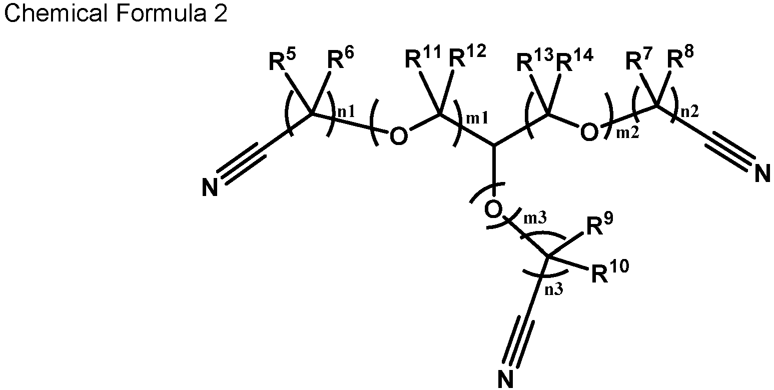 wherein, in Chemical Formula 2,
   R⁵ to R¹⁴ are each independently hydrogen, a halogen, a cyano group, a substituted or unsubstituted C1 to C5 alkyl group, a substituted or unsubstituted C1 to C5 alkoxy group, or a substituted or unsubstituted C6 to C12 aryl group,
   n1 to n3 are each independently one selected from integers of 0 to 20,
   n1+n2+n3 ≥ 1, and
   m1 to m3 are each independently one selected from integers of 0 to 2.

The first additive as defined by Chemical Formula 1 includes two cyano functional groups. The cyano functional groups work as an anion receptor and induce stable formation of PF₆⁻. the first additive further includes a -Si-O-Si- group to capture HF (e.g., by reacting with HF), which is a decomposition product of the electrolyte. Removal of HF may suppress or reduce decomposition of PF₆⁻ on the surface of the positive electrode, which occurs during high temperature cycle operation of a rechargeable lithium battery. The first additive may therefore prevent or reduce oxidation of the electrolyte, thereby improving high-rate charge and discharge characteristics and swelling characteristics. In addition, a film is formed on the surface of the positive electrode to suppress or reduce a side reaction of the electrolyte and collapse of the electrode structure, thereby improving performance of the rechargeable lithium battery.

In addition, the second additive as defined by Chemical Formula 2 is further included in the electrolyte, thereby further improving the protection function of the positive electrode at a high voltage. The second additive stably forms the film on the surface of the positive electrode due to coordination (e.g., by way of a coordinate covalent bond or dative bond) of unshared electron pairs of N at the terminal CN with various suitable types (or kinds) of metals such as, for example, transition metals and/or the like of the positive electrode active material, and thus, suppresses or reduces the side reaction of the positive electrode with the electrolyte.

It is assumed that due to the three CN functional groups of the second additive, the coordination bond (e.g., coordinate covalent bond or dative bond) with the metal may be sterically formed, which enables the formation of a more robust film.

In addition, by including the third compound together with the first compound and the second compound, it is possible to improve cycle-life and effectively control the gas generated from the positive electrode and the negative electrode during high-temperature storage.

For example, L¹ and L² of Chemical Formula 1 may each independently be a substituted or unsubstituted C3 to C10 alkylene group.

For example, R¹ to R⁴ of Chemical Formula 1 may each independently be a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C8 to C10 cycloalkynyl group, or a substituted or unsubstituted C6 to C20 aryl group.

For example, R¹ to R⁴ of Chemical Formula 1 may each independently be a substituted or unsubstituted C1 to C10 alkyl group.

For example, the first compound may be 1,3-bis(3-cyanopropyl)tetramethyl disiloxane.

For example, n1 to n3 in Chemical Formula 2 may be different integers.

When n1 to n3 in Chemical Formula 2 are different integers, Chemical Formula 2 may have an asymmetric structure, and in this asymmetric structure, binding energy with a metal ion is much lowered, thereby contributing to more stable and stronger bond formation.

As an example, n3 in Chemical Formula 2 may be 0, and n1+n2 ≥ 1.

As an example, in Chemical Formula 2, n1+n2 ≥ 2.

For example, in Chemical Formula 2, 10 ≥ n1+n2 ≥ 2, for example 8 ≥ n1+n2 ≥ 2, or 6 ≥ n1+n2 ≥ 2.

For example, m1 to m3 in Chemical Formula 2 may be the same integer.

As an example, m1, m2, and m3 in Chemical Formula 2 may be 0 or 1 at the same time.

For example, the second compound may be selected from 1,3,5-hexanetricarbonitrile, 1,3,6-hexanetricarbonitrile, and 1,2,3-tris(2-cyanoethoxy)propane.

For example, the third compound may be represented by Chemical Formula 3

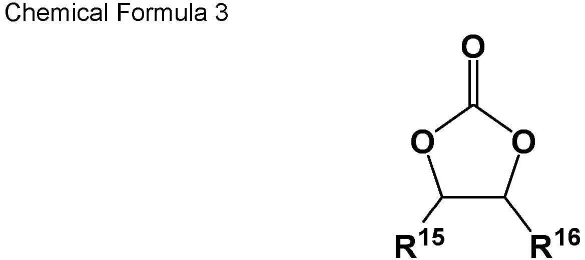

In Chemical Formula 3,
R¹⁵ and R¹⁶ are each independently hydrogen, a halogen, a cyano group (CN), a nitro group (NO₂), or a fluorine-substituted C1 to C5 alkyl group, and
at least one selected from R¹⁵ and R¹⁶ is a halogen, a cyano group (CN), a nitro group (NO₂), or a fluorine-substituted C1 to C5 alkyl group.

For example, the third compound may be fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

For example, the first compound may be included in an amount of about 0.5 parts by weight to about 3.0 parts by weight, for example, about 0.6 parts by weight to about 3.0 parts by weight, about 0.7 parts by weight to about 3.0 parts by weight, about 0.8 parts by weight to about 3.0 parts by weight, about 0.9 parts by weight to about 3.0 parts by weight, about 1.0 part by weight to about 3.0 parts by weight, about 1.0 part by weight to about 2.0 parts by weight, or about 1.0 part by weight to about 1.5 parts by weight based on 100 parts by weight of the electrolyte for a rechargeable lithium battery.

For example, the second compound may be included in an amount of about 1.0 part by weight to about 5.0 parts by weight, for example about 1.0 part by weight to about 4.0 parts by weight, about 1.0 part by weight to about 3.5 parts by weight, about 1.0 part by weight to about 3.0 parts by weight, about 1.5 parts by weight to about 3.0 parts by weight, or about 2.0 parts by weight to about 3.0 parts by weight based on 100 parts by weight of the electrolyte for a rechargeable lithium battery.

For example, the third compound may be included in an amount of about 3.0 parts by weight to about 10 parts by weight, for example about 3.0 parts by weight to about 9.0 parts by weight, about 3.0 parts by weight to about 8.0 parts by weight, about 3.0 parts by weight to about 7.0 parts by weight, about 4.0 parts by weight to about 7.0 parts by weight, or about 5.0 parts by weight to about 7.0 parts by weight based on 100 parts by weight of the electrolyte for a rechargeable lithium battery.

For example, the total weight of the first compound and the second compound may be about 2.0 parts by weight to about 6.0 parts by weight, for example about 2.0 parts by weight to about 5.0 parts by weight, about 2.5 parts by weight to about 5.0 parts by weight, or about 3.0 parts by weight to about 5.0 parts by weight based on 100 parts by weight of the electrolyte for a rechargeable lithium battery.

In an example, the first compound and the second compound may be mixed together in a weight ratio of about 1: 0.5 to about 1: 5, about 1: 0.5 to about 1: 3, about 1:1 to about 1: 3, or about 1: 2 to about 1: 3.

For example, the composition (e.g., the composition including the first compound, the second compound, and the third compound) may be included in an amount of about 5.0 parts by weight to about 15 parts by weight, for example, about 7.0 parts by weight to about 15 parts by weight, about 8.0 parts by weight to about 15 parts by weight, about 9.0 parts by weight to about 15 parts by weight, or about 10 parts by weight to about 15 parts by weight based on 100 parts by weight of the electrolyte for a rechargeable lithium battery.

When the content (e.g., amount) of the composition and the content (e.g., amount) of each component in the composition are within the above ranges, it is possible to implement a rechargeable lithium battery having improved resistance characteristics (e.g., improved electrical resistance characteristics) during high-temperature storage and improved cycle-life characteristics at room temperature and high temperature.

The non-aqueous organic solvent serves as a medium for transmitting ions taking part in the electrochemical reaction of a battery (e.g., the rechargeable lithium battery).

The non-aqueous organic solvent may include a carbonate-based, ester-based, ether-based, ketone-based, alcohol-based, and/or aprotic solvent.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and/or the like. The ester-based solvent may include methyl acetate, ethyl acetate, n-propyl acetate, t-butyl acetate, methyl propionate, ethyl propionate, propyl propionate, decanolide, mevalonolactone, and caprolactone. The ether-based solvent may include dibutyl ether, tetraglyme, diglyme, dimethoxyethane, 2-methyltetrahydrofuran, and tetrahydrofuran. In addition, ketone-based solvent may include cyclohexanone. In addition, the alcohol-based solvent may include ethyl alcohol and isopropyl alcohol, and the aprotic solvent may include nitriles such as R¹⁸-CN (where R¹⁸ is a C2 to C20 linear, branched, or cyclic hydrocarbon group and may include a double bond, an aromatic ring, and/or an ether bond), amides such as dimethylformamide, dioxolanes such as 1,3-dioxolane, and sulfolanes.

The non-aqueous organic solvent may be used alone or in a mixture. When the organic solvent is used in a mixture, the mixture ratio may be controlled in accordance with a suitable or desirable battery performance.

The non-aqueous organic solvent may further include an aromatic hydrocarbon-based organic solvent in addition to the carbonate-based solvent. In this case, the carbonate-based solvent and the aromatic hydrocarbon-based solvent may be mixed together in a volume ratio of about 1:1 to about 30:1.

The aromatic hydrocarbon-based solvent may include an aromatic hydrocarbon-based compound represented by Chemical Formula 4.

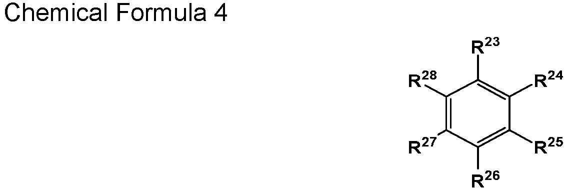

In Chemical Formula 4, R²³ to R²⁸ are the same as or different from each other and are selected from hydrogen, a halogen, a C1 to C10 alkyl group, and haloalkyl group.

Examples of the aromatic hydrocarbon-based solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, and 2,3,5-triiodotoluene, xylene.

The lithium salt dissolved in the non-organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein, x and y are natural numbers, for example, an integer ranging from 1 to 20, LiCl, Lil, LiB(C₂O₄)₂ (lithium bis(oxalato) borate: LiBOB), LiDFOB (lithium difluoro(oxalato)borate), and Li[PF₂(C₂O₄)₂] (lithium difluoro (bisoxalato) phosphate). The lithium salt may be used in a concentration in a range from about 0.1 M to about 2.0 M. When the lithium salt is included at the above concentration range, an electrolyte may have excellent performance and lithium ion mobility due to suitable or optimal electrolyte conductivity and viscosity.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

In one or more embodiments, the positive electrode active material may include at least one selected from composite oxides of a metal selected from cobalt, manganese, nickel, iron, and a combination thereof, and lithium.

In one or more embodiments, one in which a portion of the metal of the composite oxide may be substituted with another suitable metal may be used, the phosphoric acid compound of the composite oxide, for example, may be at least one selected from LiNiPO₄, LiFePO₄, LiCoPO₄, and LiMnPO₄, and a composite oxide having a coating layer on the surface thereof or a mixture of the composite oxide and the composite oxide having a coating layer may be used. The coating layer may include a coating element compound of an oxide or hydroxide of a coating element, oxyhydroxide of the coating element, oxycarbonate of the coating element, or hydroxycarbonate of the coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any suitable processes generally used in the art as long as it does not cause any (or substantially any) side effects on the properties of the positive electrode active material (e.g., spray coating, dipping, and/or the like).

The positive electrode active material may be, for example, at least one selected from lithium composite oxides represented by Chemical Formula 5.

Chemical Formula 5 LiₓM¹_{y}M²_{z}M³_{1-y-z}O₂

In Chemical Formula 5,
0.5≤x≤1.8, 0<y≤1, 0≤z≤1, 0≤y+z≤1, and M¹, M², and M³ are each independently selected from a metal such as Ni, Co, Mn, Al, Sr, Mg and La.

In one or more embodiments the positive electrode active material may be at least one selected from LiCoO₂, LiNiO₂, LiMnO₂, LiMn₂O₄, LiNiₐMn_{b}Co_{c}O₂ (a+b+c=1), LiNiₐMn_{b}Co_{c}Al_{d}O₂ (a+b+c+d=1), and LiNiₑCo_{f}Al_{g}O₂ (e+f+g=1).

For example, the positive electrode active material selected from LiNiₐMn_{b}Co_{c}O₂ (a+b+c=1), LiNiₐMn_{b}Co_{c}Al_{d}O₂ (a+b+c+d=1), and LiNiₑCo_{f}Al_{g}O₂ (e+f+g=1) may be a high Ni-based positive electrode active material.

For example, in the case of LiNiₐMn_{b}Co_{c}O₂ (a+b+c=1) and LiNiₐMn_{b}Co_{c}Al_{d}O₂ (a+b+c+d=1), the nickel content may be greater than or equal to about 60% (a ≥ 0.6), and, for example, greater than or equal to about 80% (a ≥ 0.8).

For example, in the case of LiNiₑCo_{f}Al_{g}O₂ (e+f+g=1), the nickel content may be greater than or equal to about 60% (e ≥ 0.6), and, for example, greater than or equal to about 80% (e ≥ 0.8).

An amount of the positive electrode active material may be about 90 wt% to about 98 wt% based on the total weight of the positive electrode active material layer.

In one or more embodiments of the present disclosure, the positive electrode active material layer may include optionally a conductive material (e.g., an electrically conductive material) and a binder. Herein, each amount of the binder and the conductive material may be about 1 wt% to about 5 wt% based on the total weight of the positive electrode active material layer.

The conductive material is included to impart (or improve) conductivity (e.g., electrical conductivity) to the positive electrode. Any suitable electrically conductive material may be used as the conductive material unless it causes a chemical change in a battery (e.g., an undesirable chemical change in the rechargeable lithium battery). Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

The positive electrode current collector may be Al, but is not limited thereto.

The negative electrode includes a negative electrode current collector and a negative electrode including a negative electrode active material active material layer on the negative electrode current collector.

The negative electrode active material may include a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions includes carbon materials. The carbon material may be any suitable, generally-used carbon-based negative electrode active material in a rechargeable lithium battery. Examples of the carbon material include crystalline carbon, amorphous carbon, and a combination thereof. The crystalline carbon may include graphite such as non-shaped, and/or sheet, flake, spherical, and/or fiber shaped natural graphite and/or artificial graphite. The amorphous carbon may include a soft carbon, a hard carbon, a mesophase pitch carbonized product, calcined coke, and/include the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, SiOₓ (0 < x < 2), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, SnO₂, a Sn-R⁶¹ alloy (wherein R⁶¹ is an alkali metal, an alkaline-earth metal, a Group 13 element, a Group 14 element, a Group 15 element, a Group 16 element, a transition element, a rare earth element, or a combination thereof, and not Sn). At least one of the foregoing may be mixed together with SiO₂.

The elements Q and R⁶¹ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, and Po.

The transition metal oxide may include a vanadium oxide and a lithium vanadium oxide.

In one or more embodiments, the negative electrode active material may include at least one selected from graphite and a Si composite.

The graphite may be, for example, natural graphite, artificial graphite, or a combination thereof.

The Si composite includes a core including Si-based particles and an amorphous carbon coating layer, for example, the Si-based particles include at least one selected from Si particles, a Si-C composite, SiOₓ (0 < x ≤ 2), and a Si alloy.

For example, a void is included in the central portion of the core including the Si-based particles, a radius of the central portion corresponds to about 30% to about 50% of the radius of the Si composite, an average particle diameter of the Si composite is about 5 µm to 20 µm, and an average particle diameter of the Si-based particles is about 10 nm to about 200 nm.

In the present specification, the average particle diameter may be a particle size (D50) at 50% by volume in a cumulative size-distribution curve.

When the average particle diameter of the Si-based particles is within the above range, volume expansion occurring during charging and discharging may be suppressed or reduced, and interruption of a conductive path due to particle crushing during charging and discharging may be prevented or reduced.

The core including the Si-based particles further includes amorphous carbon, in this case, the central portion does not include amorphous carbon, and the amorphous carbon may exist only in or at the surface portion of the Si composite.

As described herein, "the surface portion" means a region from the outermost surface of a central portion to the outermost surface of a Si composite.

In addition, the Si-based particles may be included in the Si composite as a whole substantially uniformly, and, for example, they may exist in a substantially uniform concentration in the central portion and the surface portion of the Si composite.

The amorphous carbon may be soft carbon, hard carbon, a mesophase pitch carbonized product, calcined coke, or a combination thereof.

For example, the Si-C composite may include Si particles and crystalline carbon.

The Si particles may be included in an amount of about 1 wt% to about 60 wt%, for example, about 3 wt% to about 60 wt%, based on the total weight of the Si-C composite.

The crystalline carbon may be, for example, graphite, and, for example, natural graphite, artificial graphite, or a combination thereof.

An average particle diameter of the crystalline carbon may be about 5 µm to about 30 µm.

When the negative electrode active material includes both graphite and Si composite, the graphite and Si composite may be included in the form of a mixture, and in this case, the graphite and Si composite may be included in a weight ratio of about 99: 1 to about 50: 50.

In one or more embodiments, the graphite and Si composite may be included in a weight ratio of about 97: 3 to about 80: 20, or about 95: 5 to about 80: 20.

The amorphous carbon precursor may include a coal-based pitch, mesophase pitch, petroleum-based pitch, coal-based oil, petroleum-based heavy oil, and/or a polymer resin such as a phenol resin, a furan resin, and/or a polyimide resin.

In the negative electrode active material layer, the negative electrode active material may be included in an amount of about 95 wt% to about 99 wt% based on the total weight of the negative electrode active material layer.

In an embodiment, the negative electrode active material layer may include a binder, and optionally a conductive material (e.g., an electrically conductive material). In the negative electrode active material layer, the amount of the binder may be about 1 wt% to about 5 wt% based on the total weight of the negative electrode active material layer. When it further includes the conductive material, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder and/or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylene copolymer, polyethyleneoxide, polyvinylpyrrolidone, polyepichlorohydrine, polyphosphazene, polyacrylonitrile, polystyrene, an ethylenepropylenediene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as the negative electrode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of about 0.1 to about 3 parts by weight based on 100 parts by weight of the negative electrode active material.

The conductive material is included to improve electrode conductivity (e.g., electrical conductivity). Any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal (e.g., an electrically conductive material), and a combination thereof.

The rechargeable lithium battery may further include a separator between the negative electrode and the positive electrode, depending on a type (or kind) of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, or multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one selected from a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler and/or an inorganic filler.

Hereinafter, examples of the present disclosure and comparative examples are described.

### Manufacture of Rechargeable Lithium Battery Cells

### Comparative Example 1

LiCoO₂ as a positive electrode active material, polyvinylidene fluoride as a binder, and ketjen black as a conductive material were mixed together in a weight ratio of 97:2:1 and then, dispersed in N-methyl pyrrolidone, thereby preparing a positive electrode active material slurry.

The positive electrode active material slurry was coated on a 14 µm-thick Al foil and then, dried at 110 °C and pressed, thereby manufacturing a positive electrode.

A negative electrode active material slurry was prepared by mixing together artificial graphite as a negative electrode active material, styrene-butadiene rubber as a binder, and carboxylmethyl cellulose as a thickener in a weight ratio of 97:1:2 and then, dispersed in distilled water.

The negative electrode active material slurry was coated on a 10 µmm-thick Cu foil and then, dried at 100 °C and pressed, thereby manufacturing a negative electrode.

The positive electrode and the negative electrode were assembled with a 25 µmm-thick polyethylene separator therebetween into an electrode assembly, and an electrolyte was injected thereinto, thereby manufacturing a rechargeable lithium battery cell.

The electrolyte has the following composition.

### Composition of Electrolyte

Salt: LiPF₆ 1.3 M
Solvent: ethylene carbonate : propylene carbonate : propyl propionate (EC : PC : PP = volume ratio of 10:15:75)

### Comparative Example 2

A rechargeable lithium battery cell was manufactured in substantially the same manner as in Comparative Example 1 except that 7.0 parts by weight of fluoroethylene carbonate (FEC) was added to the electrolyte.

In the composition of the electrolyte, "parts by weight" means a relative weight of the additive based on 100 weight of the total (lithium salt + non-aqueous organic solvent) of the electrolyte.

### Comparative Example 3

A rechargeable lithium battery cell was manufactured in substantially the same manner as in Comparative Example 1 except that 7.0 parts by weight of fluoroethylene carbonate and 3.0 parts by weight of 1,3,6-hexanetricarbonitrile (HTCN) were added to the electrolyte.

### Comparative Example 4

A rechargeable lithium battery cell was manufactured in substantially the same manner as in Comparative Example 1 except that 7.0 parts by weight of fluoroethylene carbonate and 1.0 part by weight of 1,3-bis(3-cyanopropyl)tetramethyl disiloxane (SiCN) were added to the electrolyte.

### Comparative Example 5

A rechargeable lithium battery cell was manufactured in substantially the same manner as in Comparative Example 1 except that 7.0 parts by weight of fluoroethylene carbonate, 3.0 parts by weight of 1,3,6-hexanetricarbonitrile, and 1.0 part by weight of PSAN (phenylsulfonylacetonitrile) were added to the electrolyte.

### Example 1

A rechargeable lithium battery cell was manufactured in substantially the same manner as in Comparative Example 1 except that 7.0 parts by weight of fluoroethylene carbonate, 3.0 parts by weight of 1,3,6-hexanetricarbonitrile, and 1.0 part by weight of 1,3-bis(3-cyanopropyl)tetramethyl disiloxane were added to the electrolyte.

### Example 2

A rechargeable lithium battery cell was manufactured in substantially the same manner as in Comparative Example 1 except that 7.0 parts by weight of fluoroethylene carbonate, 3.0 parts by weight of TCEP (1,2,3-tris(2-cyanoethoxy)propane), and 1.0 part by weight of 1,3-bis(3-cyanopropyl)tetramethyl disiloxane were added to the electrolyte.

### Comparative Example 6

A rechargeable lithium battery cell was manufactured in substantially the same method as in Example 1 except that the negative electrode active material was changed into silicon nanowires (SiNWs).

Each composition according to the examples and the comparative examples is shown in Table 1.

**Table 1**

| | Additive composition First additive (parts by weight) | Second additive(parts by weight) | Third additive (parts by weight) | Negative electrode active material |
|---|---|---|---|---|
| Comparative Example 1 | - | - | - | artificial graphite |
| Comparative Example 2 | - | - | FEC (7.0) | artificial graphite |
| Comparative Example 3 | - | HTCN (3.0) | FEC (7.0) | artificial graphite |
| Comparative Example 4 | SiCN (1.0) | - | FEC (7.0) | artificial graphite |
| Comparative Example 5 | PSAN (1.0) | HTCN (3.0) | FEC (7.0) | artificial graphite |
| Example 1 | SiCN (1.0) | HTCN (3.0) | FEC (7.0) | artificial graphite |
| Example 2 | SiCN (1.0) | TCEP (3.0) | FEC (7.0) | artificial graphite |
| Comparative Example 6 | SiCN (1.0) | HTCN (3.0) | FEC (7.0) | SiNWs |

### Evaluation 1: EDS Mapping Analysis

After charging and discharging the cells at a high temperature, an energy dispersive spectrometry (EDS) mapping analysis of the negative electrodes was performed to check a surface image and an element distribution.

The circular full cells of Example 1 and Comparative Examples 1 and 3 were 300 times repeatedly charged and discharged under conditions of constant current constant voltage (CCCV) charge at 1.5 C and at 4.5 V and cutoff at 0.05 C and conditions of CC discharge at 1.0 C and cutoff at 3.0 V at 45 °C and then, disassembled to perform an EDS analysis of the positive and negative electrodes.

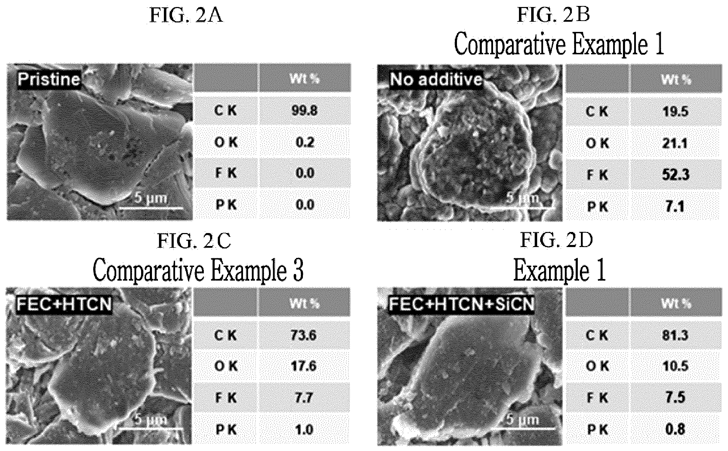

FIG. 2 is an EDS mapping image of the surface of the negative electrode after charging and discharging of the full-cell.

Referring to FIGS. 2A-2D, Example 1 exhibited significantly reduced F and P components, compared with Comparative Examples 1 and 3.

Accordingly, as the first, second, and third compounds were concurrently (e.g., simultaneously) included as an additive component, the electrolyte was effectively suppressed from decomposition under the high temperature condition.

### Evaluation 2: Measurement of Amount of Gas Generated after High-temperature Storage

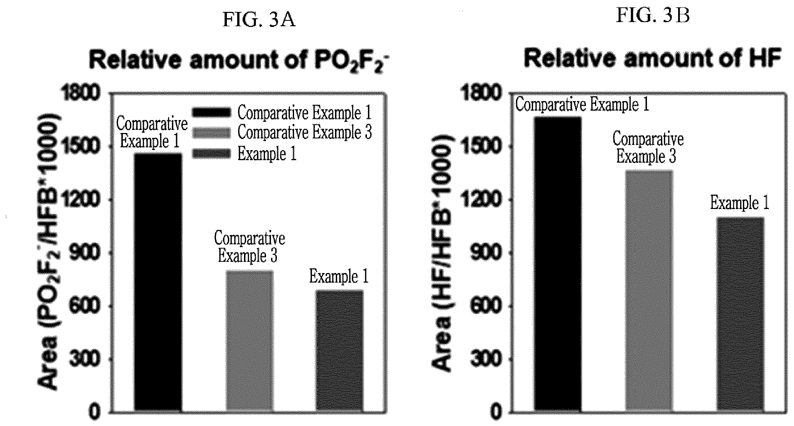

The circular full cells of Example 1 and Comparative Examples 1 and 3 were charged under conditions of CCCV charge at 0.2 C/4.5 V and cutoff at 0.05 C to state of charge (SOC) 100% and then, allowed to stand in a 60 °C chamber for 7 days. After making a hole at the bottom end of the circular full cells by using a gas collection jig, an amount of gas internally generated therefrom was measured by gas chromatography (GC) connected without external leakage. The measurement results of the generated gas amounts are shown in FIGS. 3A-3B.

Referring to FIGS. 3A-3B, Example 1 concurrently (e.g., simultaneously) including 3 types (or kinds) of additives exhibited a significantly reduced amount of generated gas, compared with Comparative Example 1 including no additive or Comparative Example 3 including the second and third compounds, but not the first compound. Accordingly, an electrolyte according to an example embodiment improved stability of a lithium battery cell.

### Evaluation 3: Evaluation of High-temperature Cycle-life Characteristics (Discharge Capacity Evaluation)

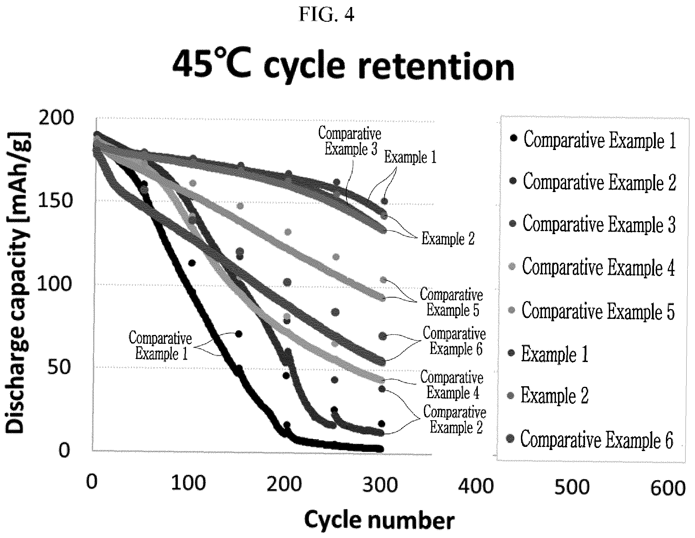

The rechargeable lithium battery cells according to Examples 1 and 2 and Comparative Examples 1 to 6 were 3 cycles charged and discharged at 0.1 C and then, 300 cycles charged at 1.5 C and discharged at 1.0 C to evaluate discharge capacity of the battery cells, and the results are shown in Table 2 and FIG. 4. Herein, a voltage applied thereto was in a range of 3.0 V to 4.5 V (discharge to 3.0 V and charge to 4.5 V), and a temperature for the evaluation was set at 45 °C.

FIG. 4 is a graph showing the discharge capacity according to the cycle progress during high-temperature charging and discharging of the rechargeable lithium battery cells.

Referring to Table 2 and FIG. 4, Examples 1 and 2 including all 3 types (or kinds) of additives exhibited excellent discharge capacity of 70% or more. In particular, because the cell of Comparative Example 5 showing coulomb efficiency near to 99%, which is further described herein below, exhibited much higher discharge capacity, compared with cells in which at least one additive out of 3 types (or kinds) of additives was replaced like Comparative Example 5, the cells according to the examples exhibited much improved cycle-life characteristics.

In addition, compared with when an Si-based negative electrode was applied (Comparative Example 6), when the carbon-based negative electrodes of Examples 1 and 2 were applied, significantly improved cycle-life characteristics were obtained.

### Evaluation 4: Evaluation of High-temperature Cycle-life Characteristics (Coulombic Efficiency Evaluation)

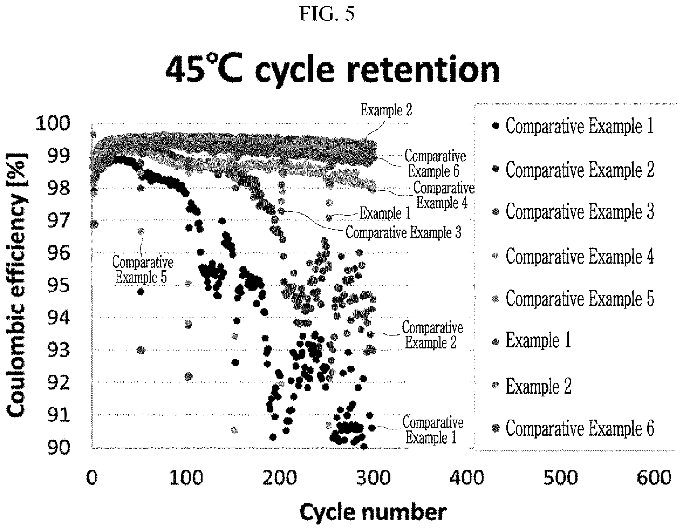

The rechargeable lithium battery cells according to Examples 1 and 2, and Comparative Examples 1 to 6 were 3 cycles charged and discharged at 0.1 C and then, 300 cycles charged at 1.5 C and discharged at 1.0 C to evaluate coulomb efficiency of the cells, and the results are shown in Table 1 and FIG. 5. Herein, a voltage applied to the cells was in a range of 3.0 V to 4.5 V (discharge to 3.0 V and charge to 4.5 V), and a temperature for the evaluation was set at 45 °C.

FIG. 5 shows the measurement results of the coulombic efficiency according to the high-temperature charge/discharge cycle for the rechargeable lithium battery cells.

Referring to Table 2 and FIG. 5, Examples 1 and 2 including all three types (or kinds) of additives exhibited coulombic efficiency of over 99%, which was near to 100%, and thus, excellent and accordingly, exhibited improved cycle-life characteristics.

In addition, compared with when an Si-based negative electrode was applied (Comparative Example 6), when the carbon-based negative electrodes of Examples 1 and 2 were applied, significantly improved coulomb efficiency was obtained.

**Table 2**

| | Cycle-life characteristics at high temperature (45 °C) | |
|---|---|---|
| | Discharge capacity (%) | Coulomb efficiency (%) |
| Comparative Example 1 | 2 | 88.2 |
| Comparative Example 5 | 50 | 99.2 |
| Example 1 | 78 | 99.2 |
| Example 2 | 73 | 99.3 |
| Comparative Example 6 | 31 | 98.9 |

### Description of Symbols

100: rechargeable lithium pouch battery
10: positive electrode
20: negative electrode
30: separator
110: electrode assembly
120: case
130: electrode tab

## Claims

1. An electrolyte for a rechargeable lithium battery (100), comprising:
a non-aqueous organic solvent,
a lithium salt, and
an additive,
wherein the additive is a composition comprising a first compound, a second compound, and a third compound,
the first compound is represented by Chemical Formula 1,
the second compound is represented by Chemical Formula 2, and
the third compound is a cyclic carbonate compound: 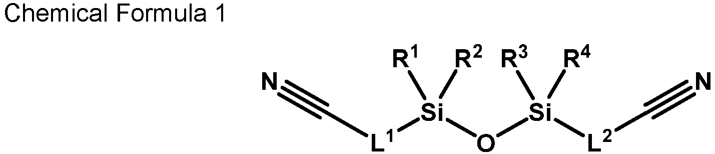 wherein, in Chemical Formula 1,
L¹ and L² are each independently a substituted or unsubstituted C1 to C10 alkylene group, and
R¹ to R⁴ are each independently a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group; 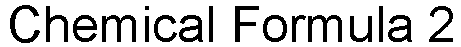 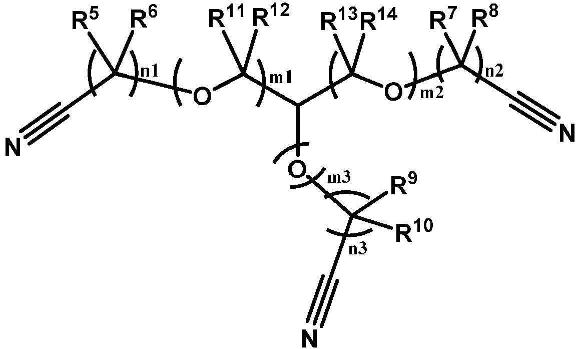 wherein, in Chemical Formula 2,
R⁵ to R¹⁴ are each independently hydrogen, a halogen, a cyano group, a substituted or unsubstituted C1 to C5 alkyl group, a substituted or unsubstituted C1 to C5 alkoxy group, or a substituted or unsubstituted C6 to C12 aryl group,
n1 to n3 are each independently one selected from integers of 0 to 20,
n1+n2+n3 ≥ 1, and
m1 to m3 are each independently one selected from integers of 0 to 2,
wherein "substituted" refers to replacement of at least one hydrogen of a substituent by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group.

2. The electrolyte for a rechargeable lithium battery of claim 1, wherein:
L¹ and L² of Chemical Formula 1 are each independently a substituted or unsubstituted C3 to C10 alkylene group.

3. The electrolyte for a rechargeable lithium battery of claim 1 or 2, wherein:
R¹ to R⁴ of Chemical Formula 1 are each independently a substituted or unsubstituted C1 to C10 alkyl group.

4. The electrolyte for a rechargeable lithium battery of claim 1, wherein:
the first compound is 1,3-bis(3-cyanopropyl)tetramethyl disiloxane.

5. The electrolyte for a rechargeable lithium battery of claim 1, wherein:
n1 to n3 in Chemical Formula 2 are different integers.

6. The electrolyte for a rechargeable lithium battery of claim 1, wherein:
the second compound is selected from 1,3,5-hexanetricarbonitrile, 1,3,6-hexanetricarbonitrile, and 1,2,3-tris(2-cyanoethoxy)propane.

7. The electrolyte for a rechargeable lithium battery of claim 1, wherein:
the third compound is represented by Chemical Formula 3: 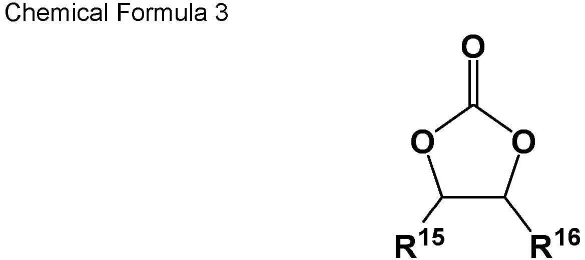 wherein, in Chemical Formula 3,
R¹⁵ and R¹⁶ are each independently hydrogen, a halogen, a cyano group (CN), a nitro group (NO₂), or a fluorine-substituted C1 to C5 alkyl group, and
at least one selected from R¹⁵ and R¹⁶ is a halogen, a cyano group (CN), a nitro group (NO₂), or a fluorine-substituted C1 to C5 alkyl group.

8. The electrolyte for a rechargeable lithium battery of claim 1, wherein:
the third compound is fluoroethylene carbonate, difluoro ethylenecarbonate, chloroethylene carbonate, dichloroethylene carbonate, bromoethylene carbonate, dibromoethylene carbonate, nitroethylene carbonate, or cyanoethylene carbonate.

9. The electrolyte for a rechargeable lithium battery of any of the preceding claims, wherein:
the first compound is included in an amount of 0.5 parts by weight to 3.0 parts by weight based on 100 parts by weight of the electrolyte for a rechargeable lithium battery.

10. The electrolyte for a rechargeable lithium battery of any of the preceding claims, wherein:
the second compound is included in an amount of 1.0 part by weight to 5.0 parts by weight based on 100 parts by weight of the electrolyte for a rechargeable lithium battery.

11. The electrolyte for a rechargeable lithium battery of any of the preceding claims, wherein:
the third compound is included in an amount of 3.0 parts by weight to 10 parts by weight based on 100 parts by weight of the electrolyte for a rechargeable lithium battery.

12. The electrolyte for a rechargeable lithium battery of any of the preceding claims, wherein:
a total weight of the first compound and the second compound is 2.0 parts by weight to 6.0 parts by weight based on 100 parts by weight of the electrolyte for a rechargeable lithium battery.

13. The electrolyte for a rechargeable lithium battery of any of the preceding claims, wherein:
the first compound and the second compound are mixed together in a weight ratio of 1:0.5 to 1:5.

14. The electrolyte for a rechargeable lithium battery of any of the preceding claims, wherein:
the composition is included in an amount of 5.0 parts by weight to 15 parts by weight based on 100 parts by weight of the electrolyte for a rechargeable lithium battery.

15. A rechargeable lithium battery (100), comprising:
A positive electrode (10) comprising a positive electrode active material;
a negative electrode (20) comprising a negative electrode active material; and
the electrolyte for a rechargeable lithium battery of claim 1.

## Patentansprüche

1. Elektrolyt für eine wiederaufladbare Lithiumbatterie (100), umfassend:
ein nicht wässriges organisches Lösungsmittel,
ein Lithiumsalz, und
ein Additiv,
wobei das Additiv eine Zusammensetzung ist, die eine erste Verbindung, eine zweite Verbindung und eine dritte Verbindung umfasst,
wobei die erste Verbindung durch die chemische Formel 1 dargestellt ist,
wobei die zweite Verbindung durch die chemische Formel 2 dargestellt ist, und
wobei die dritte Verbindung eine cyclische Carbonatverbindung ist: 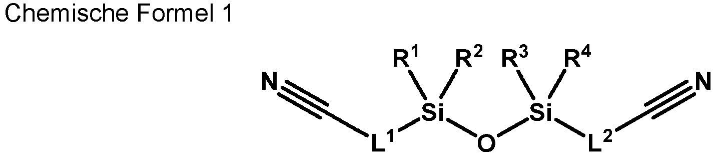 wobei in der chemischen Formel 1
L¹ und L² jeweils unabhängig für eine substituierte oder unsubstituierte C1- bis C10-Alkylengruppe stehen, und
R¹ bis R⁴ jeweils unabhängig für eine substituierte oder unsubstituierte C1- bis C10-Alkylgruppe, ein substituierte oder unsubstituierte C2- bis C10-Alkenylgruppe, eine substituierte oder unsubstituierte C2- bis C10-Alkinylgruppe, eine substituierte oder unsubstituierte C3- bis C10-Cycloalkylgruppe, eine substituierte oder unsubstituierte C3- bis C10-Cycloalkenylgruppe, eine substituierte oder unsubstituierte C3- bis C10-Cycloalkinylgruppe oder eine substituierte oder unsubstituierte C6- bis C20-Arylgruppe stehen; 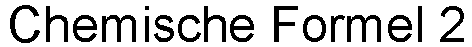 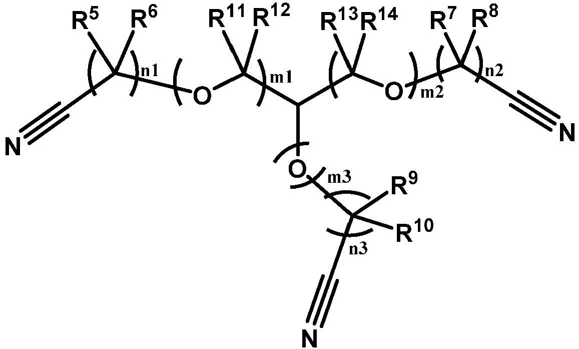 wobei in der chemischen Formel 2
R⁵ bis R¹⁴ jeweils unabhängig für Wasserstoff, ein Halogen, eine Cyanogruppe, eine substituierte oder unsubstituierte C1- bis C5-Alkylgruppe, eine substituierte oder unsubstituierte C1- bis C5-Alkoxygruppe oder eine substituierte oder unsubstituierte C6- bis C12-Arylgruppe stehen,
n1 bis n3 jeweils unabhängig aus ganzen Zahlen von 0 bis 20 ausgewählt sind,
n1+n2+n3 ≥ 1, und
m1 bis m3 jeweils unabhängig aus ganzen Zahlen von 0 bis 2 ausgewählt sind,
wobei sich "substituiert" auf den Ersatz mindestens eines Wasserstoffs eines Substituenten durch Deuterium, ein Halogen, eine Hydroxylgruppe, eine Aminogruppe, eine C1- bis C30-Aminogruppe, eine Nitrogruppe, eine C1- bis C40-Silylgruppe, eine C1- bis C30-Alkylgruppe, eine C1- bis C10-Alkylsilylgruppe, eine C6- bis C30-Arylsilylgruppe, eine C3- bis C30-Cycloalkylgruppe, eine C3- bis C30-Heterocycloalkylgruppe, eine C6- bis C30-Arylgruppe, eine C2- bis C30-Heteroarylgruppe, eine C1- bis C20-Alkoxygruppe, eine C1- bis C10-Fluoralkylgruppe oder eine Cyanogruppe bezieht.

2. Elektrolyt für eine wiederaufladbare Lithiumbatterie nach Anspruch 1, wobei:
L¹ und L² der chemischen Formel 1 jeweils unabhängig für eine substituierte oder unsubstituierte C3- bis C10-Alkylengruppe stehen.

3. Elektrolyt für eine wiederaufladbare Lithiumbatterie nach Anspruch 1 oder 2, wobei:
R¹ bis R⁴ der chemischen Formel 1 jeweils unabhängig für eine substituierte oder unsubstituierte C1- bis C10-Alkylgruppe stehen.

4. Elektrolyt für eine wiederaufladbare Lithiumbatterie nach Anspruch 1, wobei:
die erste Verbindung 1,3-Bis(3-cyanopropyl)tetramethyldisiloxan ist.

5. Elektrolyt für eine wiederaufladbare Lithiumbatterie nach Anspruch 1, wobei:
n1 bis n3 in der chemischen Formel 2 unterschiedliche ganze Zahlen sind.

6. Elektrolyt für eine wiederaufladbare Lithiumbatterie nach Anspruch 1, wobei:
die zweite Verbindung ausgewählt ist aus 1,3,5-Hexantricarbonitril, 1,3,6-Hexantricarbonitril und 1,2,3-Tris(2-cyanoethoxy)propan.

7. Elektrolyt für eine wiederaufladbare Lithiumbatterie nach Anspruch 1, wobei:
die dritte Verbindung durch die chemische Formel 3 dargestellt ist: 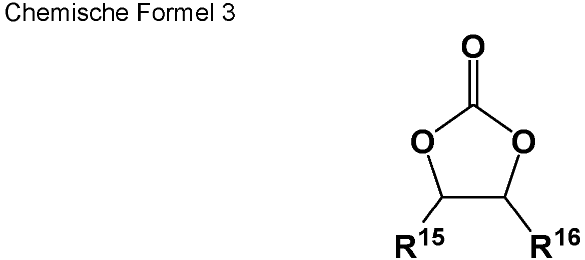 wobei in der chemischen Formel 3
R¹⁵ und R¹⁶ jeweils unabhängig für Wasserstoff, ein Halogen, eine Cyanogruppe (CN), eine Nitrogruppe (NO₂) oder eine fluorsubstituierte C1- bis C5-Alkylgruppe stehen, und
mindestens eines, das ausgewählt ist aus R¹⁵ und R¹⁶, für ein Halogen, eine Cyanogruppe (CN), eine Nitrogruppe (NO₂) oder eine fluorsubstituierte C1- bis C5-Alkylgruppe steht.

8. Elektrolyt für eine wiederaufladbare Lithiumbatterie nach Anspruch 1, wobei:
die dritte Verbindung Fluorethylencarbonat, Difluorethylencarbonat, Chlorethylencarbonat, Dichlorethylencarbonat, Bromethylencarbonat, Dibromethylencarbonat, Nitroethylencarbonat oder Cyanoethylencarbonat ist.

9. Elektrolyt für eine wiederaufladbare Lithiumbatterie nach einem der vorhergehenden Ansprüche, wobei:
die erste Verbindung in einer Menge von 0,5 Gew.-Teilen bis 3,0 Gew.-Teilen basierend auf 100 Gew.-Teilen des Elektrolyten für eine wiederaufladbare Lithiumbatterie enthalten ist.

10. Elektrolyt für eine wiederaufladbare Lithiumbatterie nach einem der vorhergehenden Ansprüche, wobei:
die zweite Verbindung in einer Menge von 1,0 Gew.-Teilen bis 5,0 Gew.-Teilen basierend auf 100 Gew.-Teilen des Elektrolyten für eine wiederaufladbare Lithiumbatterie enthalten ist.

11. Elektrolyt für eine wiederaufladbare Lithiumbatterie nach einem der vorhergehenden Ansprüche, wobei:
die dritte Verbindung in einer Menge von 3,0 Gew.-Teilen bis 10 Gew.-Teilen basierend auf 100 Gew.-Teilen des Elektrolyten für eine wiederaufladbare Lithiumbatterie enthalten ist.

12. Elektrolyt für eine wiederaufladbare Lithiumbatterie nach einem der vorhergehenden Ansprüche, wobei:
ein Gesamtgewicht der ersten Verbindung und der zweiten Verbindung 2,0 Gew.-Teile bis 6,0 Gew.-Teile basierend auf 100 Gew.-Teilen des Elektrolyten für eine wiederaufladbare Lithiumbatterie beträgt.

13. Elektrolyt für eine wiederaufladbare Lithiumbatterie nach einem der vorhergehenden Ansprüche, wobei:
die erste Verbindung und die zweite Verbindung in einem Gewichtsverhältnis von 1:0,5 bis 1:5 miteinander vermischt werden.

14. Elektrolyt für eine wiederaufladbare Lithiumbatterie nach einem der vorhergehenden Ansprüche, wobei:
die Zusammensetzung in einer Menge von 5,0 Gew.-Teilen bis 15 Gew.-Teilen basierend auf 100 Gew.-Teilen des Elektrolyten für eine wiederaufladbare Lithiumbatterie enthalten ist.

15. Wiederaufladbare Lithiumbatterie (100), umfassend:
eine positive Elektrode (10), die ein Aktivmaterial für die positive Elektrode umfasst;
eine negative Elektrode (20), die ein Aktivmaterial für die negative Elektrode umfasst; und
den Elektrolyten für eine wiederaufladbare Lithiumbatterie nach Anspruch 1.

## Revendications

1. Électrolyte pour une batterie au lithium rechargeable (100), comprenant :
un solvant organique non aqueux,
un sel de lithium, et
un additif,
dans lequel l'additif est une composition comprenant un premier composé, un deuxième composé et un troisième composé,
le premier composé est représenté par la formule chimique 1,
le deuxième composé est représenté par la formule chimique 2, et
le troisième composé est un composé de carbonate cyclique : 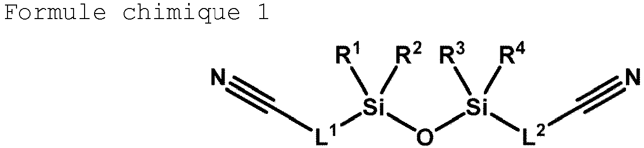 dans lequel, dans la formule chimique 1,
L¹ et L² sont chacun indépendamment un groupe alkylène en C1 à C10 substitué ou non substitué,
R¹ à R⁴ sont chacun indépendamment un groupe alkyle en C1 à C10 substitué ou non substitué, un groupe alcényle en C2 à C10 substitué ou non substitué, un groupe alcynyle en C2 à C10 substitué ou non substitué, un groupe cycloalkyle en C3 à C10 substitué ou non substitué, un groupe cycloalcényle en C3 à C10 substitué ou non substitué, un groupe cycloalcynyle en C3 à C10 substitué ou non substitué, ou un groupe aryle en C6 à C20 substitué ou non substitué ; 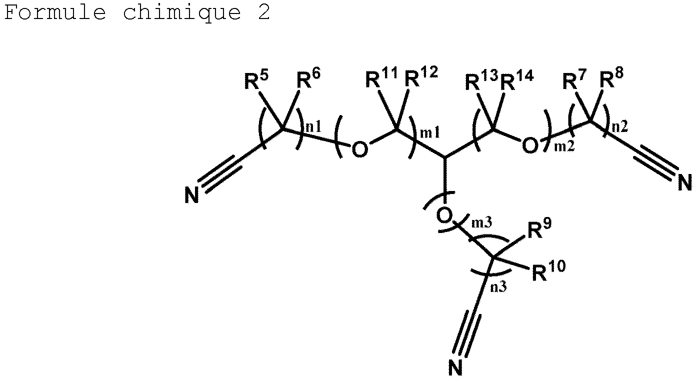 dans lequel, dans la formule chimique 2,
R⁵ à R¹⁴ sont chacun indépendamment de l'hydrogène, un halogène, un groupe cyano, un groupe alkyle en C1 à C5 substitué ou non substitué, un groupe alkoxy en C1 à C5 substitué ou non substitué, ou un groupe aryle en C6 à C12 substitué ou non substitué,
n1 à n3 sont chacun indépendamment un entier choisi parmi des entiers de 0 à 20,
n1+n2+n3 ≥ 1, et
m1 à m3 sont chacun indépendamment un entier choisi parmi des entiers de 0 à 2,
dans lequel « substitué » fait référence à un remplacement d'au moins un hydrogène d'un substituant par du deutérium, un halogène, un groupe hydroxyle, un groupe amino, un groupe amine en C1 à C30, un groupe nitro, un groupe silyle en C1 à C40, un groupe alkyle en C1 à C30, un groupe alkylsilyle en C1 à C10, un groupe arylsilyle en C6 à C30, un groupe cycloalkyle en C3 à C30, un groupe hétérocycloalkyle en C3 à C30, un groupe aryle en C6 à C30, un groupe hétéroaryle en C2 à C30, un groupe alkoxy en C1 à C20, un groupe fluoroalkyle en C1 à C10, ou un groupe cyano.

2. Électrolyte pour une batterie au lithium rechargeable selon la revendication 1, dans lequel :
L¹ à L² de la formule chimique 1 sont chacun indépendamment un groupe alkylène en C3 à C10 substitué ou non substitué.

3. Électrolyte pour une batterie au lithium rechargeable selon la revendication 1 ou 2, dans lequel :
R¹ à R⁴ de la formule chimique 1 sont chacun indépendamment un groupe alkyle en C1 à C10 substitué ou non substitué.

4. Électrolyte pour une batterie au lithium rechargeable selon la revendication 1, dans lequel :
le premier composé est du disiloxane de 1,3-bis(3-cyanopropyl)tétraméthyle.

5. Électrolyte pour une batterie au lithium rechargeable selon la revendication 1, dans lequel :
n1 à n3 dans la formule chimique 2 sont des entiers différents.

6. Électrolyte pour une batterie au lithium rechargeable selon la revendication 1, dans lequel :
le deuxième composé est choisi parmi 1,3,5-hexanetricarbonitrile, 1,3,6-hexanetricarbonitrile, et 1,2,3-tris(2-cyanoéthoxy)propane.

7. Électrolyte pour une batterie au lithium rechargeable selon la revendication 1, dans lequel :
le troisième composé est représenté par la formule chimique 3 : 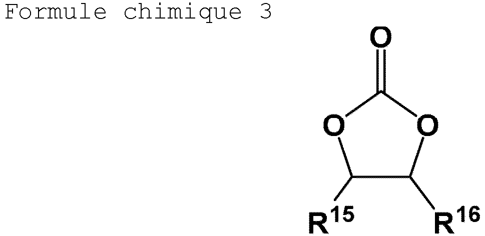 dans lequel, dans la formule chimique 3,
R¹⁵ et R¹⁶ sont chacun indépendamment de l'hydrogène, un halogène, un groupe cyano (CN), un groupe nitro (NO₂), ou un groupe alkyle en C1 à C5 substitué par du fluor, et
au moins l'un choisi parmi R¹⁵ et R¹⁶ est un halogène, un groupe cyano (CN), un groupe nitro (NO₂), ou un groupe alkyle en C1 à C5 substitué par du fluor.

8. Électrolyte pour une batterie au lithium rechargeable selon la revendication 1, dans lequel :
le troisième composé est du carbonate de fluoroéthylène, du carbonate de difluoroéthylène, du carbonate de chloroéthylène, du carbonate de dichloroéthylène, du carbonate de bromoéthylène, du carbonate de dibromoéthylène, du carbonate de nitroéthylène, ou du carbonate de cyanoéthylène.

9. Électrolyte pour une batterie au lithium rechargeable selon l'une quelconque des revendications précédentes, dans lequel :
le premier composé est inclus dans une quantité de 0,5 partie en poids à 3,0 parties en poids sur la base de 100 parties en poids de l'électrolyte pour une batterie au lithium rechargeable.

10. Électrolyte pour une batterie au lithium rechargeable selon l'une quelconque des revendications précédentes, dans lequel :
le deuxième composé est inclus dans une quantité de 1,0 partie en poids à 5,0 parties en poids sur la base de 100 parties en poids de l'électrolyte pour une batterie au lithium rechargeable.

11. Électrolyte pour une batterie au lithium rechargeable selon l'une quelconque des revendications précédentes, dans lequel :
le troisième composé est inclus dans une quantité de 3,0 parties en poids à 10 parties en poids sur la base de 100 parties en poids de l'électrolyte pour une batterie au lithium rechargeable.

12. Électrolyte pour une batterie au lithium rechargeable selon l'une quelconque des revendications précédentes, dans lequel :
un poids total du premier composé et du deuxième composé est 2,0 parties en poids à 6,0 parties en poids sur la base de 100 parties en poids de l'électrolyte pour une batterie au lithium rechargeable.

13. Électrolyte pour une batterie au lithium rechargeable selon l'une quelconque des revendications précédentes, dans lequel :
le premier composé et le deuxième composé sont mélangés l'un avec l'autre dans un rapport en poids de 1:0,5 à 1:5.

14. Électrolyte pour une batterie au lithium rechargeable selon l'une quelconque des revendications précédentes, dans lequel :
la composition est incluse dans une quantité de 5,0 parties en poids à 15 parties en poids sur la base de 100 parties en poids de l'électrolyte pour une batterie au lithium rechargeable.

15. Batterie au lithium rechargeable (100), comprenant :
une électrode positive (10) comprenant un matériau actif d'électrode positive ;
une électrode négative (20) comprenant un matériau actif d'électrode négative ; et
l'électrolyte pour une batterie au lithium rechargeable selon la revendication 1.
